# FASCICULE DE BREVET EUROPEEN

(11) **EP 3 173 824 B1**
(45) Date de publication et mention de la délivrance du brevet: **12.09.2018**
(21) Numéro de dépôt: 16200068.1
(22) Date de dépôt: 22.11.2016
(51) Int. Cl.: G01V 1/38

(54) **PROCÉDÉ ET SYSTÈME D'ANALYSE DU SOUS-SOL MARIN**
ANALYSEVERFAHREN UND -SYSTEM DES MEERESUNTERGRUNDS
METHOD AND SYSTEM FOR ANALYSING THE SEABED

(30) Priorité: 30.11.2015 FR 1502488
(43) Date de publication de la demande: 31.05.2017
(73) Titulaire: Kappa Offshore Solutions Marine Operation Service (KOSMOS), 64100 Bayonne (FR)
(72) Inventeur: CHOQUER, Thibaut, 64100 BAYONNE (FR); DELECRAZ, Sébastien, 64100 BAYONNE (FR)
(74) Mandataire: Célanie, Christian

(56) Documents cités:
- WO-A1-00/67046
- WO-A1-99/34238
- WO-A1-2013/063352

## Description

Le secteur technique de la présente invention est celui des systèmes d'analyse géologique par prospection sismique des fonds marins.

Les flûtes sismiques, également désignées par lignes sismiques ou en anglais par « streamer », sont des antennes acoustiques remorquées généralement par un navire laboratoire, notamment pour la prospection pétrolière. Une flûte sismique est constituée d'un assemblage de sections de plusieurs dizaines de mètres de long chacune et comprenant chacune une pluralité de capteurs sismiques ainsi que des composants électroniques associés pour former une antenne acoustique linéaire. Un navire laboratoire déploie généralement plusieurs flûtes sismiques de plusieurs kilomètres chacune. L'ensemble de ces flûtes sismiques constitue un réseau de flûtes sismiques tractées.

Le navire laboratoire tracte généralement une ou plusieurs sources sismiques capables de générer un signal source adapté à l'acquisition sismique. Une source sismique est par exemple constituée d'un réseau de canons à air immergés. L'acquisition de données géophysiques est réalisée par les capteurs des flûtes sismiques se présentant généralement sous la forme d'hydrophones. L'onde de pression générée par la source sismique traverse la colonne d'eau jusqu'au fond marin. Cette onde sismique est réfléchie ou réfractée par le fond marin et par les structures géologiques sous-jacentes. L'onde renvoyée représentative de la structure géologique du fond sous-marin peut ainsi être analysée et exploitée.

Les campagnes d'exploration sismiques peuvent être programmées sur des périodes s'étendant sur plusieurs semaines ou plusieurs mois. Les flûtes sismiques sont en effet généralement trainées à des vitesses faibles comprises entre 3 et 6 noeuds. De plus les virages permettant de joindre entre elles deux lignes droites d'acquisition sont des phases longues et complexes généralement inexploitables pour l'exploration sismique. La prospection sismique marine comprend en effet l'analyse d'une zone géographique étendue couverte généralement par des trajets en ligne droite joints entre eux par des virages. Les flûtes sismiques sont disposées côte à côte pour couvrir une zone du fond marin en relation avec le positionnement de la ou des sources sismiques.

Un problème technique résulte de l'optimisation des installations en surface pour la couverture, de façon efficace, d'une zone sous-marine. Le document US-2007/0165486 décrit l'association de navires, embarquant chacun une source sismique, disposées autour de lignes sismiques tractées par des navires embarquant également une source sismique. L'utilisation de multiples sources autour des lignes sismiques permet une optimisation des mesures pour l'analyse du sous-sol marin et permet en outre de réaliser des analyses du sous-sol marin également lors des virages des navires tractant les flûtes sismiques. La flotte nécessitant de multiples bateaux source mobilise toutefois des ressources particulièrement importantes pour sa mise en oeuvre ainsi que pour son fonctionnement.

WO 00/67046 divulgue un procédé d'analyse du sous-sol marin dans lequel au moins un navire source émet des impulsions sismiques réfléchies par le fond sous-marin et les couches du sous-sol, les impulsions sismiques réfléchies sont détectées, lors de phases d'analyse, par une pluralité de flûtes sismiques immergées et tractées les unes à côté des autres, et dans lequel une pluralité de navires d'entraînement, distincts du navire source, tractent chacun au moins une des flûtes sismiques.

La présente invention a pour but de pallier les inconvénients de l'art antérieur en fournissant un procédé et un système d'analyse du sous-sol marin permettant notamment de réduire les ressources nécessaires pour sa mise en oeuvre et pour son fonctionnement.

Cet objectif est atteint grâce à un procédé d'analyse du sous-sol marin dans lequel :
- au moins un navire source émet des impulsions sismiques réfléchies par le fond sous-marin et les couches du sous-sol,
- les impulsions sismiques réfléchies sont détectées, lors de phases d'analyse, par une pluralité de flûtes sismiques immergées et tractées les unes à côté des autres,
- les flûtes sismiques sont localisées géographiquement par un dispositif de localisation géographique,
- les flûtes sismiques sont localisées les unes par rapport aux autres par un dispositif de positionnement relatif comprenant des balises acoustiques disposées le long de chaque flûte sismique,
caractérisé en ce qu'une pluralité de navires d'entraînement, distincts dudit navire source, tractent chacun au moins une desdites flûtes sismiques, les flûtes sismiques étant tractées, au moins lors de virages des navires d'entraînement, à au moins une profondeur déterminée distincte d'un navire d'entraînement à l'autre de façon à permettre un croisement d'au moins deux flûtes sismiques, tractées par des navires d'entraînement distincts, l'une au-dessus de l'autre.

Selon une particularité de l'invention, les phases d'analyse en ligne droite sont réalisées entre deux virages, les navires d'entraînement étant décalés longitudinalement les uns devant les autres selon leur ordre de démarrage du virage, préalablement à chaque virage, les flûtes sismiques immergées et tractées les unes à côté des autres étant alors positionnées à des profondeurs étagées d'un navire d'entraînement à l'autre et à des profondeurs décroissantes en allant du premier navire d'entraînement démarrant le virage, au dernier navire d'entraînement démarrant le virage.

Selon une autre particularité de l'invention, préalablement à chaque virage, les flûtes sismiques tractées par un même navire d'entraînement sont également positionnées à des profondeurs étagées selon des profondeurs croissantes ou décroissantes en allant de la flûte la plus à l'extérieur du virage à la flûte la plus à l'intérieur du virage.

Selon une autre particularité de l'invention, préalablement à chaque virage, les navires d'entraînement sont décalés longitudinalement par un décalage successif en allant de la flûte extérieure au virage à la flûte intérieure au virage.

Selon une autre particularité de l'invention, préalablement à chaque virage, au moins la flûte immergée à la profondeur la moins grande est attachée à une bouée de queue portant une première balise de localisation géographique réalisant une localisation géographique de l'extrémité arrière de ladite flûte.

Selon une autre particularité de l'invention, les flûtes sismiques sont localisées géographiquement au moins par la localisation d'une pluralité de deuxièmes balises de localisation géographique disposées chacune dans un des navires d'entraînement.

Selon une autre particularité de l'invention, les flûtes sismiques sont localisées géographiquement par :
- positionnement relatif de balises acoustiques disposées aux extrémités arrières des flûtes par rapport à au moins une balise acoustique portée par au moins un navire de localisation, distinct des navires d'entraînement, tel que le navire source, et
- localisation géographique d'au moins une troisième balise de localisation géographique disposée dans ledit navire de localisation.

Selon une autre particularité de l'invention, au moins deux flûtes sismiques sont écartées l'une de l'autre par au moins une aile portante de façon à produire une faible trainée et à pouvoir être tractées par les navires d'entraînement ayant chacun une jauge brute inférieure à 500 UMS.

Un autre objet de l'invention concerne un système d'analyse du sous-sol marin comprenant :
- au moins un navire source d'émission d'impulsions sismiques réfléchies par le fond sous-marin et les couches du sous-sol,
- une pluralité de flûtes sismiques immergées et tractées les unes à côté des autres pour recevoir les impulsions sismiques réfléchies,
- un dispositif de localisation géographique des flûtes sismiques et
- un dispositif de positionnement relatif comprenant une pluralité de balises acoustiques de localisation des flûtes sismiques les unes par rapport aux autres, les balises acoustiques étant disposées le long de chaque flûte sismique,
caractérisé en ce qu'il comprend une pluralité de navires d'entraînement distincts dudit navire source et tractant chacun au moins une desdites flûtes sismiques, chaque navire d'entraînement comprenant un organe de commande de la profondeur de ladite flûte tractée agencé de façon à régler au moins une profondeur déterminée distinctement d'un navire d'entraînement à l'autre au moins lors des virages des navires d'entraînement de façon à permettre un croisement d'au moins deux flûtes sismiques, tractées par des navires d'entraînement distincts, l'une au-dessus de l'autre.

Selon une autre particularité de l'invention, chaque navire d'entraînement tracte au moins deux flûtes sismiques écartées l'une de l'autre par au moins une aile portante de façon à produire une faible trainée et à pouvoir être tractées par les navires d'entraînement ayant chacun une jauge brute inférieure à 500 UMS.

Selon une autre particularité de l'invention, ledit organe de commande de la profondeur est agencé de façon à régler, à des profondeurs étagées, lesdites deux flûtes sismiques tractées par le même navire d'entraînement, au moins lors des virages des navires d'entraînement, les flûtes étant réglées à des profondeurs croissantes ou décroissantes en allant de l'extérieur du virage vers l'intérieur du virage.

Selon une autre particularité de l'invention, une des flûtes est attachée à une bouée de queue portant une première balise de localisation géographique, la profondeur de cette flûte étant réglée au minimum au moins lors des virages.

Selon une autre particularité de l'invention, le dispositif de localisation géographique comprend une pluralité de deuxièmes balises de localisation géographique disposées chacune dans un des navires d'entraînement.

Selon une autre particularité de l'invention, le dispositif de localisation géographique comprend une troisième balise de localisation géographique d'au moins une extrémité arrière d'une des flûtes sismiques, cette troisième balise étant disposée dans un navire de localisation distinct des navires d'entraînement, tel que le navire source, le navire de localisation comprenant une balise acoustique de positionnement relatif des extrémités arrière des flûtes sismiques chacune équipée d'une des balises acoustiques à leur extrémité arrière.

Un tout premier avantage est que les phases de virage, non exploitées pour l'analyse, sont réduites au maximum et donc un gain de temps.

Un autre avantage de la présente invention réside dans le fait que les navires d'entraînement peuvent être choisis de faible tonnage, voire même inférieur à 500 UMS, ce qui réduit leur coût et améliore leur manoeuvrabilité, réduisant encore davantage les phases de virages.

Un autre avantage de la présente invention est qu'elle permet de nombreuses configurations avec un ou plusieurs navires sources ou un nombre variable de flûtes sismiques selon différentes géométries d'acquisition et permet ainsi une grande variété d'analyses.

Ainsi, la grande variété de géométries d'acquisition permet l'emploi d'un nombre important de flûtes.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente un navire entraînant deux flûtes sismiques équipées chacune d'une bouée de queue ;
- la figure 2 représente une vue de côté du navire d'entraînement de la figure 1 ;
- la figure 3 représente un navire entraînant deux flûtes sismiques à une profondeur déterminée ;
- la figure 4 représente une vue de côté du navire d'entraînement de la figure 3 ;
- la figure 5 représente un exemple d'organe de commande de la profondeur d'une flûte sismique ;
- la figure 6 représente un exemple d'organe de commande de la profondeur et de la position latérale d'une flûte sismique ;
- les figures 7 et 8 représentent chacune un exemple d'aile portante permettant un décalage latéral de la flûte sismique ;
- la figure 9 représente un exemple de bouée disposée en queue de flûte sismique et portant une balise de positionnement acoustique ainsi qu'une balise de positionnement géographique ;
- les figures 10 et 11 représentent chacune un exemple de balise de positionnement acoustique ;
- les figures 12 à 15 et 12bis représentent des exemples de configurations pour les phases d'analyse du sous-sol marin;
- les figures 16a, 16b et 16c représentent un exemple de positionnement des flûtes préalablement à un virage respectivement selon une vue de dessus, une vue arrière et une vue de profil;
- les figures 17a, 17b et 17c représentent un autre exemple de positionnement des flûtes préalablement à un virage respectivement selon une vue de dessus, une vue arrière et une vue de profil;
- les figures 18a, 18b et 18c représentent un autre exemple de positionnement des flûtes préalablement à un virage respectivement selon une vue de dessus, une vue arrière et une vue de profil;
- les figures 19a, 19b et 19c représentent un autre exemple de positionnement des flûtes préalablement à un virage respectivement selon une vue de dessus, une vue arrière et une vue de profil ;
- les figures 20 à 26 représentent différents motifs de virages selon l'invention ;
- la figure 27 représente un exemple de procédé selon l'invention.

L'invention va à présent être décrite avec davantage de détails. Les procédés d'analyse du sous-sol marin comprennent, de façon connue, les étapes suivantes :
- l'émission d'impulsions sismiques par un ou plusieurs navires source, ces ondes étant réfléchies par le fond sous-marin et les couches du sous-sol,
- la détection des impulsions sismiques réfléchies par un réseau de flûtes sismiques immergées et tractées les unes à côté des autres,
- la localisation géographique des flûtes sismiques, c'est-à-dire selon un repère terrestre, par exemple par un système de localisation par satellite, ainsi que
- la localisation relative des flûtes sismiques le unes par rapport aux autres grâce à un système de balises acoustiques disposées immergées le long de chaque flûte sismique.

Les données détectées et traitées par les flûtes sismiques en relation avec leur position ainsi que la position de la ou des sources sismiques, permet ainsi d'établir une cartographie du sous-sol marin. Lorsque les flûtes sismiques sont tractées par plusieurs navires, les données collectées par chaque navire sont retransmises par ondes radio à un navire laboratoire centralisant l'ensemble des données permettant d'établir la cartographie du sous-sol marin.

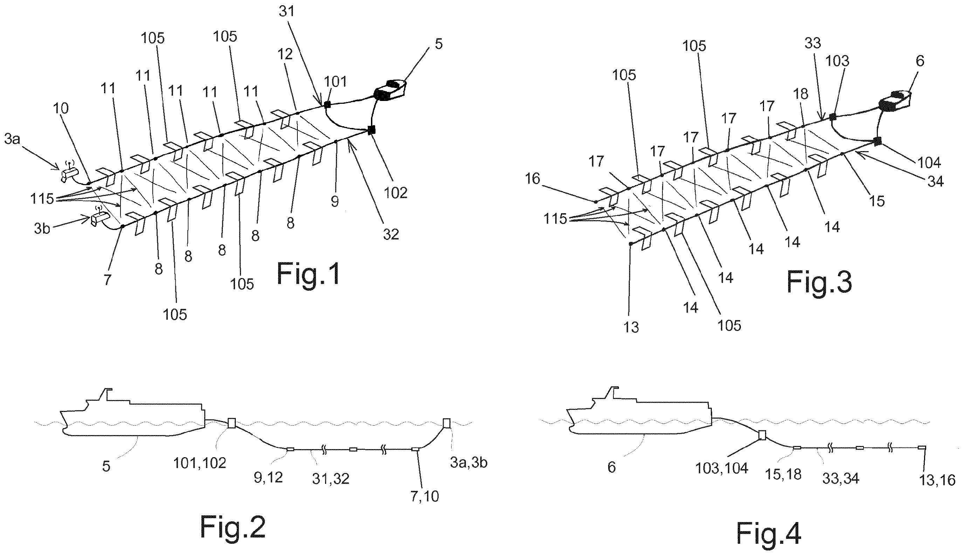

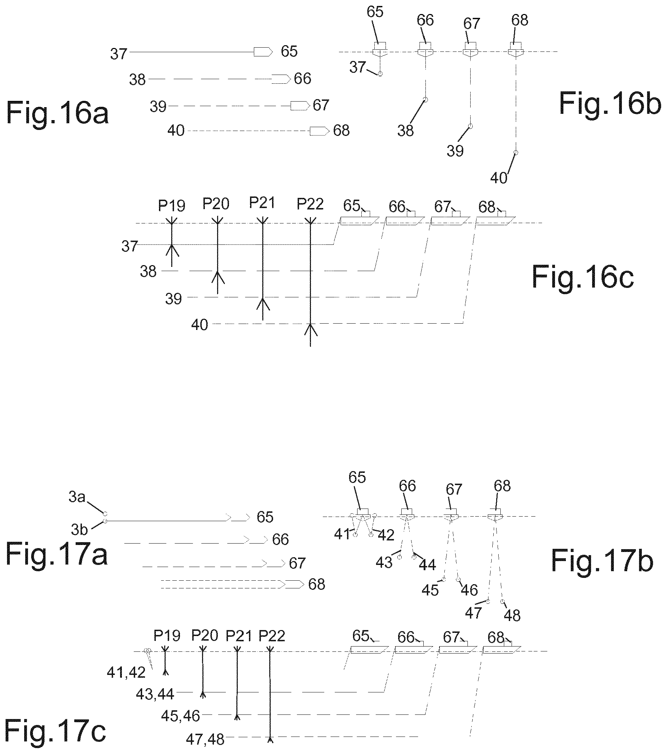

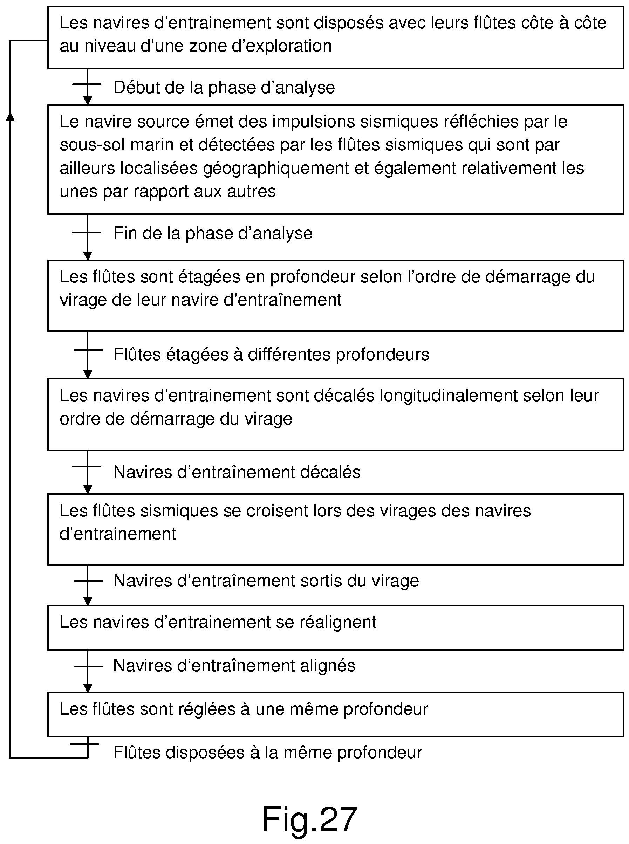

La présente invention permet d'optimiser les ressources nécessaires grâce à une configuration des différents navires et un agencement des flûtes sismiques permettant des virages optimisés. Un exemple de procédé selon l'invention est donné à la figure 27. Des exemples de moyens mis en oeuvre sont illustrés aux figures 1 à 15. Des exemples de différentes configurations mises en oeuvre et leur utilisation en mer sont illustrées aux figures 16a à 26.

La figure 1 représente un navire 5 entraînant deux flûtes sismiques 31 et 32 équipées chacune d'une bouée de queue 3a ou 3b, ce même navire étant représenté vu de côté à la figure 2. Le navire 5 tracte deux flûtes sismiques 31 et 32 faisant partie d'un réseau de flûtes. L'ensemble des flûtes sismiques du réseau tractées par plusieurs navires d'entraînement sera décrit ultérieurement.

Les deux flûtes sont écartées l'une de l'autre par des ailes portantes 101 et 102. Des balises acoustiques de positionnement relatif 7, 8, 9, 10, 11 et 12 sont disposées le long de chaque flûte. Des balises 9 et 12 sont notamment disposées en tête et des balises 7 et 10 en queue. Les balises acoustiques sont disposées régulièrement le long de chaque flûte sismique. Les balises immergées émettent et reçoivent ainsi dans l'eau des ondes acoustiques permettant leurs positionnements relatifs, les ondes acoustiques 115 de positionnement relatif étant schématisées en traits fins entre les flûtes 31 et 32.

Une bouée 3a ou 3b est attachée en queue de chaque flûte. Chaque bouée permet un positionnement géographique. Chaque bouée comprend également une balise acoustique de positionnement relatif, en communication avec les autres balises acoustiques.

Le nombre de flûtes n'est pas limitatif. Chaque navire d'entraînement peut par exemple tracter une seule flûte sismique. Chaque navire d'entraînement peut également tracter trois flûtes sismiques voire un nombre plus important de flûtes sismiques.

Les hydrophones, les balises acoustiques et les bouées, en communication avec une unité de commande du navire d'entraînement 5, communiquent toutes les données représentatives des signaux reçus à cette unité de commande.

L'unité de commande transmet également des consignes de positionnement pour régler la profondeur de chaque flûte et éventuellement son positionnement latéral. Des organes de positionnement en profondeur 105 sont disposés régulièrement à cet effet le long de chaque flûte sismique. Ces organes de positionnement en profondeur 105 sont ainsi en communication avec l'unité de commande du navire d'entraînement. Les organes de positionnement reçoivent une consigne de profondeur et éventuellement de décalage latéral et transmettent par ailleurs en temps réel des mesures représentatives de leur profondeur et éventuellement de leur position latérale.

Les données reçues par le navire d'entraînement sont par exemple transmises à un navire laboratoire regroupant les données de chaque navire d'entraînement.

La figure 3 représente un navire 6 entraînant deux flûtes sismiques 33 et 34 à une profondeur déterminée, ce navire 6 étant représenté en vue de côté à la figure 4. Là encore le navire 6 tracte deux flûtes sismiques 33 et 34 faisant partie du réseau de flûtes. Les deux flûtes sont écartées l'une de l'autre par des ailes portantes 103 et 104.

Là encore des balises acoustiques de positionnement relatif 13, 14, 15, 16, 17 et 18 sont disposées le long de chaque flûte 33 et 34. Des balises 15 et 18 sont notamment disposées en tête et des balises 13 et 16 en queue. Les balises acoustiques sont disposées régulièrement le long de chaque flûte sismique. Les balises émettent et reçoivent ainsi des ondes acoustiques permettant leurs positionnements relatifs, les ondes acoustiques 115 de positionnement relatif étant schématisées en traits fins entre les flûtes 33 et 34.

Les flûtes ne sont pas attachées à une bouée de queue, leur extrémité arrière restant immergée et libre. Chaque flûte est ainsi dépourvue de bouée de queue. La profondeur de la flûte peut avantageusement être réglée facilement selon différentes profondeurs plus ou moins importantes en queue de flûte sismique qui est sans attache avec un élément en surface. Les croisements lors des virages sont ainsi rendus possibles. Par ailleurs des changements de configurations sont envisageables. Le repérage absolu des flûtes sismiques sera détaillé par la suite.

Là encore le nombre de flûtes n'est pas limitatif. Le navire d'entraînement peut par exemple tracter une seule flûte sismique. Le navire d'entraînement peut également tracter trois flûtes sismiques voire un nombre plus important de flûtes sismiques.

De même que pour la figure 1, les hydrophones et les balises acoustiques, en communication avec une unité de commande du navire d'entraînement 6, communiquent toutes les données représentatives des signaux reçus à cette unité de commande. L'unité de commande transmet également des consignes de positionnement pour régler la profondeur de chaque flûte et éventuellement son positionnement latéral. Des organes de positionnement en profondeur 105 sont disposés régulièrement à cet effet le long de chaque flûte sismique. Ces organes de positionnement en profondeur 105 sont, là encore, en communication avec l'unité de commande du navire d'entraînement. Les données reçues par le navire d'entraînement sont par exemple transmises à un navire laboratoire regroupant les données de chaque navire d'entraînement.

Plusieurs navires d'entraînement tractant des flûtes sismiques, tels que décrits en relation avec les figures 1 et 3, sont utilisés pour former le réseau de flûtes sismiques.

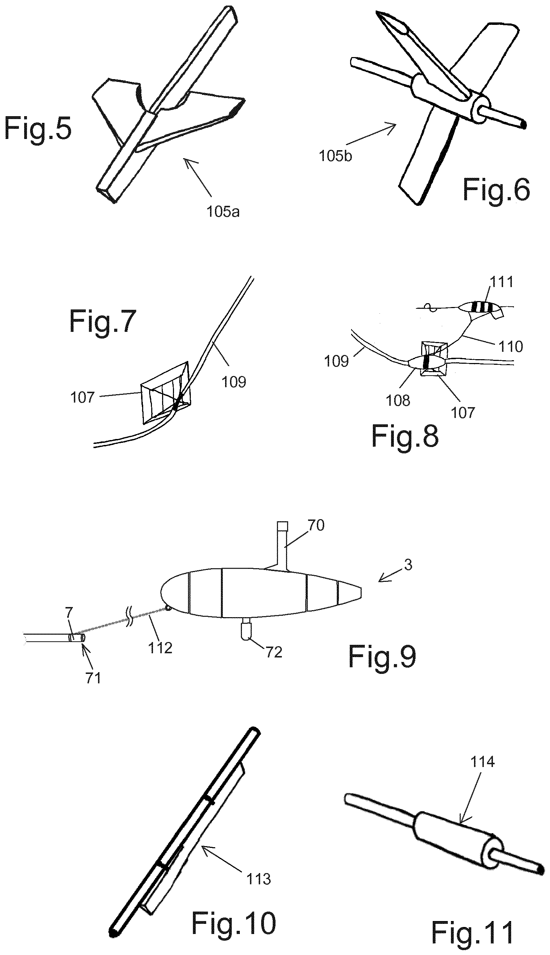

La figure 5 représente un exemple d'organe 105a de commande de la profondeur. Cet organe 105a comprend deux ailes manoeuvrables permettant de régler la profondeur.

La figure 6 représente un exemple d'organe 105b de commande de la profondeur et du positionnement latéral. Cet organe 105b comprend trois ailes manoeuvrables permettant de régler la profondeur et la position latérale.

Les flûtes peuvent ainsi être positionnées chacune à une profondeur déterminée et éventuellement latéralement grâce aux organes de commande de la profondeur, également désignés par avions.

Les figures 7 et 8 représentent chacune un exemple de mise en oeuvre d'une aile portante permettant un décalage latéral de la flûte sismique, en tête de flûte. Il peut s'agir, comme représenté à la figure 7, d'un panneau 107 simplement attaché en tête de flûte sismique d'une part et à un câble électro-tracteur 109 relié au navire d'entraînement d'autre part.

La figure 8 représente un autre exemple d'aile portante. Le panneau déflecteur 107 est fixé à un limiteur de courbure 108 relié en amont à un câble électro-tracteur 109 lui-même relié au navire d'entraînement et en aval à la flûte sismique. Le limiteur de courbure 108 est relié par ailleurs à une chaîne 110 de liaison avec une bouée 111. La longueur de la chaîne 110 permet de régler la profondeur de l'aile portante 107.

La profondeur de la flûte sismique, en aval de l'aile portante 107, peut par ailleurs être réglée à une profondeur différente. La profondeur augmente par exemple en aval de l'aile portante 107 pour atteindre une profondeur réglée depuis le navire d'entraînement.

Une aile portante, également désignée par déflecteur, peut être utilisée pour chaque flûte. Une des flûtes sismiques tractées par un même navire d'entraînement peut aussi être laissée sans déflecteur, cette flûte étant alors tractée dans l'alignement du navire d'entraînement.

La figure 9 représente un exemple de bouée en queue de flûte sismique portant une balise de positionnement acoustique 72 et une balise de positionnement géographique 70. La bouée 3 est reliée par une chaîne 112 à l'extrémité arrière 71 de la flûte sismique. La balise acoustique 72 de la bouée 3 permet une localisation relative de la balise acoustique 7 en queue de flûte sismique. Les informations générées par la balise acoustique 72 et par la balise géographique 70 sont par exemple transmises par un câble relié à la flûte sismique ou par ondes radio directement au navire laboratoire.

Les figures 10 et 11 représentent chacune un exemple de balise de positionnement acoustique. La balise acoustique 114 peut être intégrée à la structure de la flûte comme représenté à la figure 11. Il est également possible de fixer la balise acoustique 113 à la flûte par des colliers de serrage, la balise étant alors reliée à un module de liaison sans fils intégré à la flûte sismique.

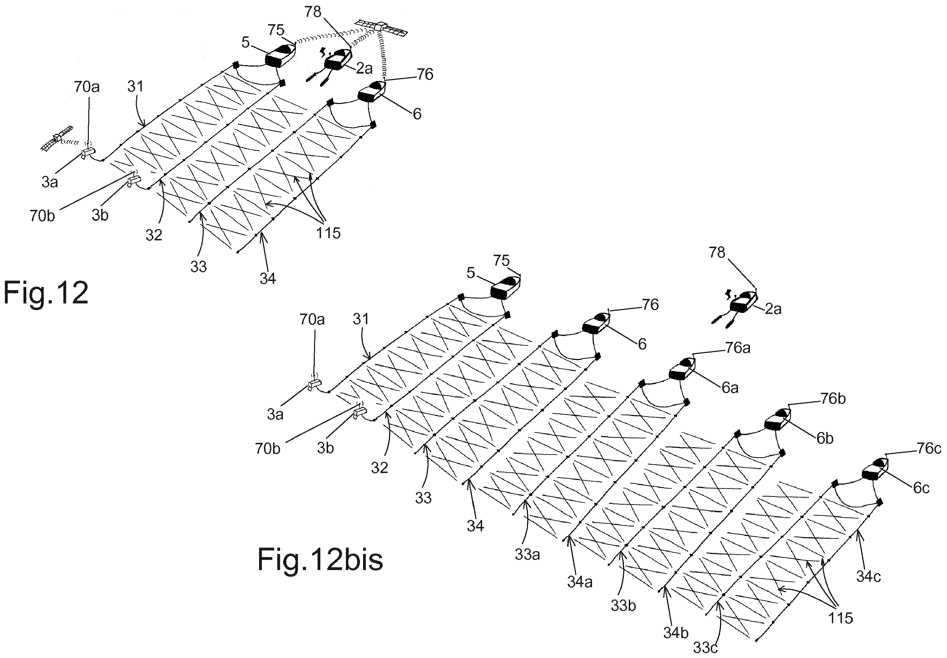

Les figures 12 à 15 représentent des exemples de configurations possibles pour les phases d'analyse du sous-sol marin. Chacune de ces configurations comprend deux navires d'entraînement tractant chacun deux flûtes sismiques pour former un réseau de quatre flûtes sismiques. Le nombre de flûtes sismiques du réseau et le nombre de flûtes sismiques par navire d'entraînement est donné à titre d'exemple et de façon non limitative.

La figure 12 montre un réseau comprenant quatre flûtes sismiques 31, 32, 33 et 34 trainées par deux navires d'entraînement 5 et 6. Les communications 115 entre les balises acoustiques sont représentées en traits fins. Un navire source 2a est positionné en avant des flûtes sismiques entre les navires d'entraînement 5 et 6.

Le premier navire d'entraînement 5 tracte deux flûtes 31 et 32 chacune attachée à une bouée 3a ou 3b à leur extrémité arrière. Le second navire d'entraînement 6 tracte deux flûtes 33 et 34 dont l'extrémité arrière reste immergée et libre, c'est-à-dire dépourvue de bouée. On peut également augmenter ou diminuer le nombre de flûtes par navire d'entraînement. On peut aussi prévoir un ou plusieurs autres navires d'entraînement 6 dont les extrémités arrière restent immergées et libres, comme représenté à la figure 12bis. La figure 12bis représente une configuration reprenant tous les éléments de la figure 12, la configuration de la figure 12bis comprenant en outre trois navires d'entraînement 6a, 6b ou respectivement 6c portant chacun une balise de positionnement géographique 76a, 76b ou respectivement 76c et tractant chacun deux flûtes sismiques 33a et 34b, 33b et 34b ou respectivement 33c et 34c dont les extrémités arrière restent immergées et libres, c'est-à-dire dépourvues de bouées.

Les bouées de queue 3a et 3b comprennent chacune une balise de localisation géographique 70a et 70b permettant de localiser précisément l'extrémité arrière de ces flûtes sismiques. Une seule bouée peut également être utilisée, la bouée comprenant une balise acoustique permettant un positionnement relatif de chacune des extrémités arrière.

Les navires d'entraînement 5 et 6 comprennent également chacun une balise 75 et 76 de localisation géographique. Le navire source comprend également une balise de localisation géographique 78.

Les balises de localisation géographique sont par exemple des balises de localisation par satellite, par exemple du type GPS (Global Positioning System).

La ou les bouées en queue de flûte permettent de positionner géographiquement de façon précise les extrémités arrière de l'ensemble des flûtes tandis que les navires d'entraînement permettent également une localisation géographique précise de leur extrémité avant. La combinaison avec les positionnements relatifs permet un positionnement précis de l'ensemble du réseau et de la ou des sources. Le navire source 2a peut également être utilisé pour tracter une ou plusieurs flûtes. Le navire laboratoire est par exemple le navire source.

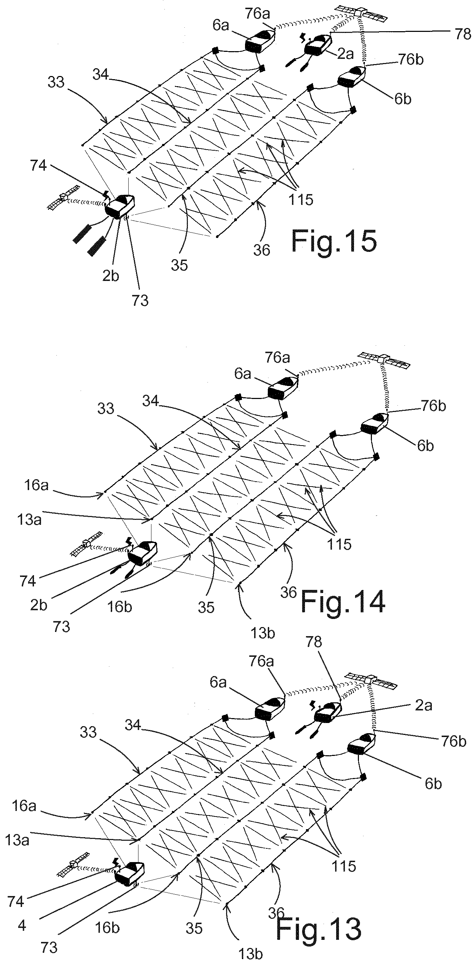

La figure 13 montre un réseau comprenant quatre flûtes sismiques 33, 34, 35 et 36 trainées par deux navires d'entraînement 6a et 6b. Les communications 115 entre les balises acoustiques sont représentées en traits fins. Un navire source 2a est positionné en avant des flûtes sismiques entre les navires d'entraînement 6a et 6b.

Chaque navire d'entraînement 6a et 6b tracte deux flûtes 33, 34 et 35, 36 dont les extrémités arrière 13a, 13b, 16a et 16b restent immergées et libres, c'est-à-dire dépourvues de bouées. On peut également prévoir un ou plusieurs autres navires d'entraînement. On peut également augmenter ou diminuer le nombre de flûtes par navire d'entraînement.

Un navire 4 de positionnement est disposé en arrière du réseau de flûtes sismiques 33 à 36. Ce navire de positionnement 4 comprend une balise de localisation géographique 74 et une balise acoustique 73 permettant un positionnement relatif de chacune des extrémités arrière 13a, 13b, 16a et 16b.

Les navires d'entraînement 6a et 6b comprennent également chacun une balise 76a et 76b de localisation géographique. Le navire source 2a comprend également une balise de localisation géographique 78.

Le navire 4 de positionnement, disposé en arrière, permet de localiser géographiquement de façon précise les extrémités arrière 13a, 13b, 16a et 16b de l'ensemble des flûtes tandis que les navires d'entraînement 6a et 6b permettent également une localisation géographique précise de leur extrémité avant. La combinaison avec les positionnements relatifs permet un positionnement précis de l'ensemble du réseau et de la ou des sources. Là encore le navire source 2a peut également être utilisé pour tracter une ou plusieurs flûtes. Le navire laboratoire est par exemple le navire source.

La figure 14 montre un réseau comprenant quatre flûtes sismiques 33, 34, 35 et 36 trainées par deux navires d'entraînement 6a et 6b. Les communications 115 entre les balises acoustiques sont représentées en traits fins. Un navire source 2a est positionné en arrière des flûtes sismiques.

Chaque navire d'entraînement 6a et 6b tracte deux flûtes 33, 34 et 35, 36 dont les extrémités arrière restent immergées et libres, c'est-à-dire dépourvues de bouées. Là encore on peut également prévoir un ou plusieurs autres navires d'entraînement. On peut également augmenter ou diminuer le nombre de flûtes par navire d'entraînement.

Le navire 2b source disposé en arrière du réseau de flûtes sismiques 33 à 36, comprend une balise de localisation géographique 74 et une balise acoustique 73 permettant un positionnement relatif de chacune des extrémités arrière 13a, 13b, 16a et 16b.

Les navires d'entraînement 6a et 6b comprennent également chacun une balise 76a et 76b de localisation géographique.

Le navire source 2b permet de localiser géographiquement de façon précise les extrémités arrière 13a, 13b, 16a et 16b de l'ensemble des flûtes tandis que les navires d'entraînement 6a et 6b permettent une localisation géographique précise de leur extrémité avant. La combinaison avec les positionnements relatifs permet un positionnement précis de l'ensemble du réseau et de la ou des sources. Là encore le navire source 2a est par exemple le navire laboratoire.

La figure 15 montre un réseau comprenant quatre flûtes sismiques 33, 34, 35 et 36 trainées par deux navires d'entraînement 6a et 6b. Les communications 115 entre les balises acoustiques sont représentées en traits fins. Un navire source 2a est positionné en avant des flûtes sismiques entre les navires d'entraînement 6a et 6b. Un autre navire source 2b est positionné en arrière des flûtes sismiques.

Là encore chaque navire d'entraînement 6a et 6b tracte deux flûtes 33, 34 et 35, 36 dont les extrémités arrière restent immergées et libres, c'est-à-dire dépourvues de bouées. On peut également prévoir un ou plusieurs autres navires d'entraînement. On peut également augmenter ou diminuer le nombre de flûtes par navire d'entraînement. Le navire source 2a peut également être utilisé pour tracter une ou plusieurs flûtes.

Le navire 2b source disposé en arrière du réseau de flûtes sismiques 33 à 36, comprend une balise de localisation géographique 74 et une balise acoustique 73 permettant un positionnement relatif de chacune des extrémités arrière.

Les navires d'entraînement 6a et 6b comprennent également chacun une balise 76a et 76b de localisation géographique. Le navire source 2a en avant des flûtes sismiques comprend également une balise de positionnement géographique 78.

Le navire source 2b arrière permet de localiser géographiquement de façon précise les extrémités arrière de l'ensemble des flûtes tandis que les navires d'entraînement 6a et 6b permettent une localisation géographique précise de leur extrémité avant. La combinaison avec les positionnements relatifs permet, là encore, un positionnement précis de l'ensemble du réseau et de la ou des sources. Le navire laboratoire peut être un des navires source 2a ou 2b.

Ainsi le fait d'utiliser plusieurs navires d'entraînement ne pénalise ni l'acquisition des données ni la précision du positionnement des flûtes sismiques. Le nombre de flûtes n'est pas limitatif. On peut par exemple utiliser un réseau de quarante flûtes tirées par vingt navires d'entraînement. On peut aussi utiliser un réseau de trente flûtes sismiques tirées par trente navires d'entraînement ou par dix navires d'entraînement. De préférence on utilise un navire d'entraînement pour deux flûtes. Des flûtes peuvent également être entrainées par un navire source dans les cas où ce dernier est disposé entre les navires d'entraînement.

Pour la préparation du virage, les flûtes sismiques sont positionnées à différentes profondeurs d'un navire d'entraînement à l'autre. Les flûtes les plus profondes sont notamment dépourvues de bouées de queue. L'ordre dans lequel les navires débutent leur virage correspond aux profondeurs décroissantes d'un navire à l'autre. Deux navires se croisent ainsi en un même point l'un après l'autre de façon à éviter une collision entre les navires et également un accrochage du second navire avec le début de la flûte sismique du premier qui ne se trouve pas encore à la profondeur de réglée pour le croisement. La profondeur de la flûte sismique augmente en effet progressivement depuis le navire d'entraînement jusqu'à atteindre la profondeur réglée spécifiquement pour les croisements. Le second navire d'entraînement et sa flûte sismique, suffisamment en arrière du premier navire d'entraînement, passe ainsi au-dessus de la flûte sismique du premier navire d'entraînement. Une même configuration peut être utilisée pour chacun des croisements successifs, un navire d'entraînement pouvant passer au-dessus de plusieurs flûtes étagées.

Les navires d'entraînement sont de préférence décalés longitudinalement les uns derrières les autres, d'un côté à l'autre du réseau de flûtes, pour faciliter leur virage. Les navires peuvent aussi être placés les uns derrière les autres en fonction de leur ordre de démarrage du virage.

Les figures 16a, 16b et 16c représentent un exemple de positionnement des flûtes préalablement à un virage respectivement selon une vue de dessus, une vue arrière et une vue de côté. Chaque navire d'entraînement 65, 66, 67 ou 68 tracte une flûte 37, 38, 39 ou 40. Le navire le plus en avant 68 tracte une flûte 40 à la profondeur P22 la plus importante, par exemple à 40m. Le deuxième navire 67, en arrière par rapport au premier navire 68, tracte une flûte 39 à une profondeur P21 moindre, par exemple de 30m. Le troisième navire 66, en arrière par rapport au deuxième navire 67, tracte une flûte 38 à une profondeur P20 moindre, par exemple de 20m. Le quatrième navire 65, en arrière par rapport au troisième navire 66, tracte une flûte 37 à une profondeur P19 moindre, par exemple de 10m.

Les flûtes sont toutes dépourvues de bouées de queue.

Le nombre de navires comme le nombre de flûtes sismiques par navire est donné à titre d'exemple et de manière non limitative.

L'ordre donné aux navires d'entraînement correspond à leur ordre de passage. L'ordre de passage peut correspondre également à leur positionnement préalablement au virage.

Les figures 17a, 17b et 17c représentent un autre exemple de positionnement des flûtes préalablement à un virage respectivement selon une vue de dessus, une vue arrière et une vue de côté. Chaque navire d'entraînement 65, 66, 67 ou 68 tracte deux flûtes 41 et 42, 43 et 44, 45 et 46 ou 47 et 48. Le navire le plus en avant 68 tracte deux flûtes 47 et 48 à la profondeur P22 la plus importante, par exemple à 40m. Le deuxième navire 67, en arrière par rapport au premier, tracte deux flûtes 45 et 46 à une profondeur P21 moindre, par exemple de 30m. Le troisième navire 66, en arrière par rapport au deuxième navire 67, tracte deux flûtes 43 et 44 à une profondeur P20 encore moindre, par exemple de 20m. Le quatrième navire 65, en arrière par rapport au troisième navire 66, tracte deux flûtes 41 et 42 à une profondeur P19 moindre, par exemple de 10m. En outre ces deux flûtes 41 et 42 sont attachées chacune à une bouée de queue 3a ou 3b.

Le navire tractant la flûte attachée à une bouée de queue ou tractant plusieurs flûtes chacune attachée à une bouée de queue démarre son virage en dernier, la ou les profondeurs de sa ou de ses flûtes étant moins importante que celle des flûtes tractées par des navires voisins. Ainsi une ou plusieurs bouées sont associées aux flûtes tractées par le même navire, les flûtes sismiques tractées par les autres navires étant dépourvus de bouées de queue.

Là encore, le nombre de navires comme le nombre de flûtes sismiques par navire est donné à titre d'exemple et de manière non limitative.

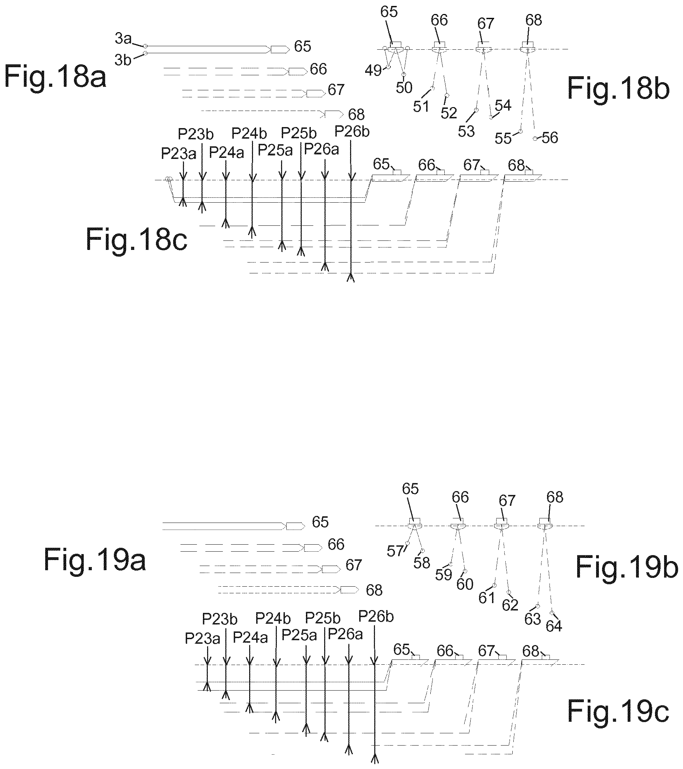

Les figures 18a, 18b et 18c représentent un autre exemple de positionnement des flûtes préalablement à un virage respectivement selon une vue de dessus, une vue arrière et une vue de côté. Chaque navire d'entraînement 65, 66, 67 ou 68 tracte deux flûtes 49 et 50, 51 et 52, 53 et 54 ou 55 et 56. Le navire le plus en avant 68 tracte deux flûtes 55 et 56 aux deux profondeurs P26a et P26b les plus importantes, par exemple à 45m et à 40m. Le deuxième navire 67, en arrière par rapport au premier navire 68, tracte deux flûtes 53 et 54 à deux profondeurs P25a et P25b moindres, par exemple de 35m et 30m. Le troisième navire 66, en arrière par rapport au deuxième navire 67, tracte deux flûtes 51 et 52 à deux profondeurs P24a et P24b moindres, par exemple de 25m et 20m. Le quatrième navire 65, en arrière par rapport au troisième navire 66, tracte deux flûtes 49 et 50 à deux profondeurs P23a et P23b encore moindres, par exemple de 15m et 10m. En outre ces deux flûtes 49 et 50 sont attachées chacune à une bouée de queue 3a ou 3b.

Comme le montre la figure 18b, toutes les flûtes sont étagées à différentes profondeurs croissantes de la flûte 49 à la flûte 56. La flûte 49 peut se trouver à l'intérieur du virage et la flûte 56 à l'extérieur du virage. Inversement la flûte 49 peut se trouver à l'extérieur du virage et la flûte 56 à l'intérieur du virage. Des exemples de virages seront détaillés par la suite.

Là encore, le nombre de navires comme le nombre de flûtes sismiques par navire est donné à titre d'exemple et de manière non limitative.

Les figures 19a, 19b et 19c représentent un autre exemple de positionnement des flûtes préalablement à un virage respectivement selon une vue de dessus, une vue arrière et une vue de côté. Chaque navire d'entraînement 65, 66, 67 ou 68 tracte deux flûtes 57 et 58, 59 et 60, 61 et 62 ou 63 et 64. Le navire le plus en avant 68 tracte deux flûtes 63 et 64 aux deux profondeurs P26a et P26b les plus importantes, par exemple à 45m et à 40m. Le deuxième navire 67, en arrière par rapport au premier navire 68, tracte deux flûtes 61 et 62 à deux profondeurs P25a et P25b moindres, par exemple de 35m et 30m. Le troisième navire 66, en arrière par rapport au deuxième navire 67, tracte deux flûtes 59 et 60 à deux profondeurs P24a et P24b moindres, par exemple de 25m et 20m. Le quatrième navire 65, en arrière par rapport au troisième navire 66, tracte deux flûtes 57 et 58 à deux profondeurs P23a et P23b moindres, par exemple de 15m et 10m.

Comme le montre la figure 19b, toutes les flûtes sont étagées à différentes profondeurs croissantes de la flûte 57 à la flûte 64. La flûte 57 peut se trouver à l'intérieur du virage et la flûte 64 à l'extérieur du virage. Inversement la flûte 57 peut se trouver à l'extérieur du virage et la flûte 64 à l'intérieur du virage.

Encore une fois, le nombre de flûtes et le nombre de flûte(s) par navire d'entraînement est donné à titre indicatif et de manière non limitative.

Selon les exemples montrés aux figures 16c, 17c, 18c et 19c, le navire le plus en avant est celui pour lequel la ou les flûtes sont réglées aux profondeurs les plus importantes et c'est donc ce navire qui démarre le virage en premier. Cela correspond à des configurations préférées selon l'invention mais on peut également laisser les navires au même niveau, avant leur croisement, sans sortir du cadre de l'invention. On peut également disposer les navires selon un positionnement différent, les navires d'entraînement démarrant leur virage selon la profondeur de leurs flûtes, dans l'ordre décroissant. Le navire tractant une flûte équipée d'une bouée est le dernier à démarrer son virage et passe au-dessus de toutes les autres flûtes sismiques étagées au point de croisement.

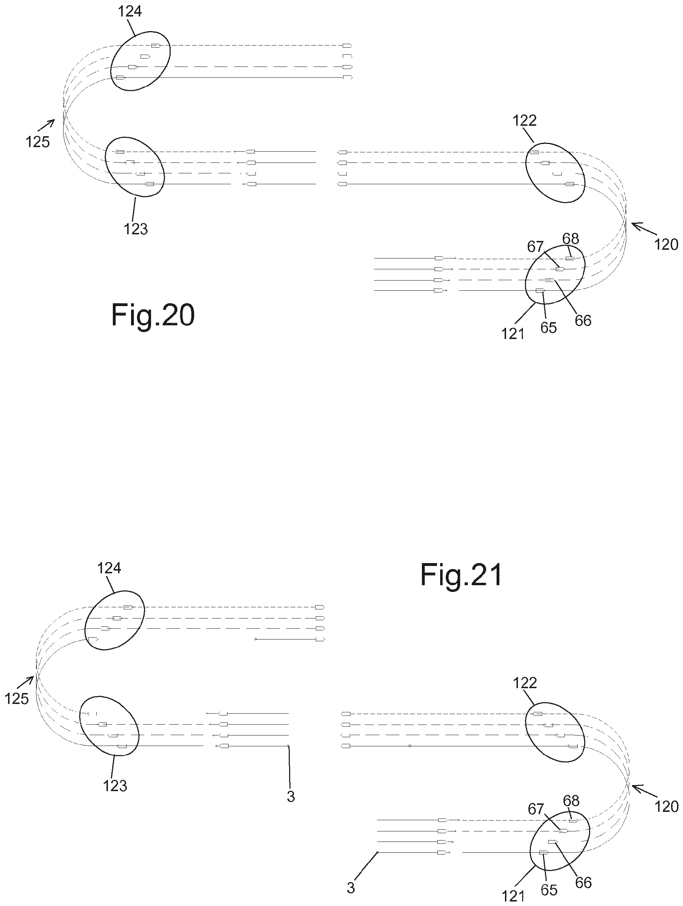

Les figures 20 à 26 représentent différents motifs de virages selon l'invention. Les flûtes tractées par les navires d'entraînement 65, 66, 67 et 68 peuvent être configurées conformément à la description faite en relation avec les figures 16 à 19. Les traits continus correspondent aux trajectoires des flûtes les moins profondes et les traits pointillés les plus petits correspondent aux trajectoires des flûtes les plus profondes.

Sur la figure 20, le premier navire d'entraînement 68 à la profondeur la plus importante passe le premier au point de croisement 120 suivi du second navire d'entraînement 67, puis du troisième 66 et enfin du quatrième 65.

Seuls les navires d'entraînement et leur trajectoire ont été représentés pour des raisons de simplification des schémas. La flotte passe d'une configuration 121 avec le premier navire d'entraînement en tête à une configuration 122 avec également le premier navire d'entraînement en tête. Le premier navire d'entraînement est systématiquement à l'intérieur du virage et en avant des autres avant chaque virage.

Les flûtes sont par exemple ramenées à la même profondeur et les navires d'entraînement au même niveau, avant d'entamer une phase d'analyse.

Les navires d'entraînement sont ensuite amenés dans une configuration 123 avec le premier navire d'entraînement en tête, les flûtes étant étagées. Les navires d'entraînement passent successivement au point de croisement 125 pour arriver dans la configuration 124 en sortie de virage.

Les flûtes sont ramenées par exemple à la même profondeur et les navires d'entraînement au même niveau avant d'entamer une nouvelle phase d'analyse.

Dans chaque configuration 121, 122, 123 ou 124 le même navire correspond au premier, au deuxième, au troisième ou au quatrième navire d'entraînement.

La figure 21 représente deux virages pour une flotte de navires d'entraînement. Les configurations 121, 122, 123 et 124 des navires d'entraînement sont les mêmes que décrits à la figure 20 ainsi que les points de croisement 120 et 125. Une différence tient au fait que le dernier navire d'entraînement 65 est associé à une ou plusieurs bouées 3 à l'extrémité arrière de sa ou de ses flûtes sismiques. Le navire associé à la bouée de queue est ainsi le dernier à passer aux points de croisement 120 et 125.

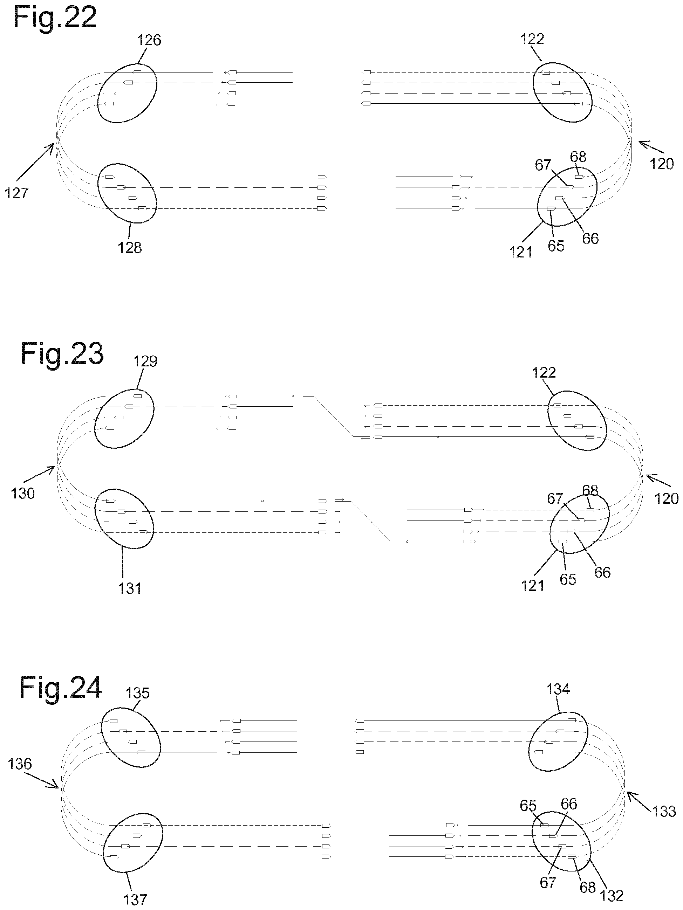

Sur la figure 22, la flotte passe d'une configuration 121 avec le premier navire d'entraînement en tête à une configuration 122 avec également le premier navire d'entraînement en tête.

Les flûtes sont par exemple ramenées à la même profondeur et les navires d'entraînement au même niveau, avant d'entamer une phase d'analyse.

Le premier navire d'entraînement est systématiquement à l'intérieur du virage mais les positions des navires sont modifiées avant chaque virage. Les premier et quatrième navires d'entraînement sont permutés et les deuxième et troisième navires d'entraînement sont permutés.

Les navires d'entraînement sont ainsi amenés dans une configuration 126 avec un nouveau premier navire d'entraînement en tête, les flûtes étant étagées. Les navires d'entraînement passent successivement au point de croisement 127 pour arriver dans la configuration 124 en sortie de virage avec le navire d'entraînement en tête.

Les flûtes sont ensuite ramenées par exemple à la même profondeur et les navires d'entraînement au même niveau avant d'entamer une nouvelle phase d'analyse.

Les premier et quatrième navires d'entraînement sont à nouveau permutés et les deuxième et troisième navires d'entraînement sont à nouveau permutés pour entamer le virage suivant.

La figure 23 montre deux virages avec le premier navire d'entraînement, c'est-à-dire tractant la flûte à la profondeur la plus importante, à l'intérieur du virage. Le quatrième navire d'entraînement entrainant une ou plusieurs bouées est systématiquement déplacé à l'extérieur du virage. Ainsi on a un repositionnement du quatrième navire d'entraînement et une permutation des premier et troisième navires d'entraînement avant chaque virage de la flotte.

La flotte passe d'une configuration 121 avec le premier navire d'entraînement en tête à une configuration 122 avec également le premier navire d'entraînement en tête.

Les flûtes sont par exemple ramenées à la même profondeur et les navires d'entraînement au même niveau, avant d'entamer une phase d'analyse.

Le quatrième navire d'entraînement est positionné à l'extérieur et les hauteurs des flûtes sont réglées en concordance avec l'ordre des navires d'entraînement en permutant les premier et troisième navires d'entraînement.

Les navires d'entraînement sont ainsi amenés dans une configuration 129 avec un premier navire d'entraînement en tête et à l'intérieur du virage, les flûtes étant étagées. Les navires d'entraînement passent successivement au point de croisement 130 pour arriver dans la configuration 131 en sortie de virage avec le premier navire d'entraînement en tête et à l'extérieur du virage.

Les flûtes sont ensuite ramenées par exemple à la même profondeur et les navires d'entraînement au même niveau avant d'entamer une nouvelle phase d'analyse.

Le quatrième navire d'entraînement est de nouveau décalé à l'extérieur du virage et les troisième et premier navires d'entraînement sont de nouveau permutés avant le virage suivant.

Dans les virages représentés à la figure 24, le premier navire d'entraînement est disposé à l'extérieur du virage et le quatrième navire d'entraînement est disposé à l'intérieur.

La flotte passe d'une configuration 132 avec le premier navire d'entraînement en tête à une configuration 134 avec également le premier navire d'entraînement en tête mais du côté intérieur par rapport au prochain virage.

Les flûtes sont par exemple ramenées à la même profondeur et les navires d'entraînement au même niveau, avant d'entamer une phase d'analyse.

Le premier navire d'entraînement est systématiquement à l'extérieur du virage mais les positions des navires sont permutées avant chaque virage. Les premier et quatrième navires d'entraînement sont permutés et les deuxième et troisième navires d'entraînement sont également permutés.

Les navires d'entraînement sont ainsi amenés dans une configuration 135 avec un nouveau premier navire d'entraînement en tête et à l'extérieur du virage, les flûtes étant étagées. Les navires d'entraînement passent successivement au point de croisement 136 pour arriver dans la configuration 137 en sortie de virage.

Les flûtes sont ramenées par exemple à la même profondeur et les navires d'entraînement au même niveau avant d'entamer une nouvelle phase d'analyse.

Les premier et quatrième navires d'entraînement sont à nouveau permutés et les deuxième et troisième navires d'entraînement sont à nouveau permutés avant le virage suivant.

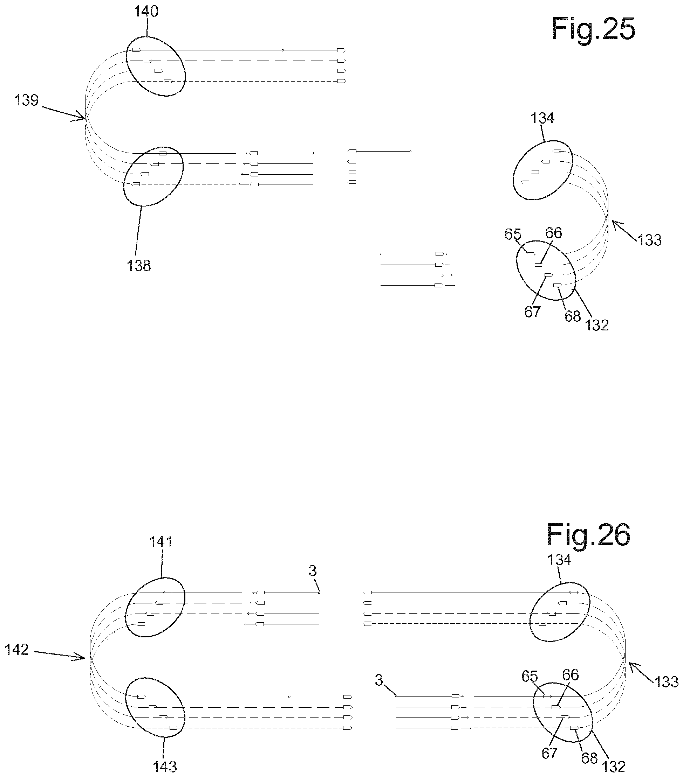

Sur la figure 25, les navires d'entraînement gardent la même position d'un virage sur l'autre, le premier navire d'entraînement étant toujours disposé à l'extérieur du virage.

La flotte passe d'une configuration 132 avec le premier navire d'entraînement en tête et à l'extérieur à une configuration 134 avec également le premier navire d'entraînement en tête et à l'extérieur par rapport au prochain virage. Les navires passent successivement au point de croisement 133.

Les flûtes sont par exemple ensuite ramenées à la même profondeur et les navires d'entraînement au même niveau, avant d'entamer une phase d'analyse.

Les navires d'entraînement sont ensuite amenés dans une configuration 138 avec le même premier navire d'entraînement en tête, les flûtes étant étagées. Les navires d'entraînement passent successivement au point de croisement 139 pour arriver dans la configuration 140 en sortie de virage.

Les flûtes sont ramenées par exemple à la même profondeur et les navires d'entraînement au même niveau avant d'entamer une nouvelle phase d'analyse.

La figure 26 représente deux virages où les navires gardent leur ordre de passage pour chaque virage mais où le premier navire d'entraînement est successivement en tête et à l'extérieur du virage puis en tête et à l'intérieur du virage. Le quatrième navire d'entraînement tracte une bouée de queue et se trouve successivement à l'intérieur puis à l'extérieur de chaque virage.

La flotte passe d'une configuration 132 avec le premier navire d'entraînement en tête et à l'extérieur, à une configuration 134 avec également le premier navire d'entraînement en tête mais à l'intérieur par rapport au prochain virage. Les navires passent successivement au point de croisement 133.

Les flûtes sont par exemple ramenées à la même profondeur et les navires d'entraînement au même niveau, avant d'entamer une phase d'analyse.

Les navires d'entraînement sont ensuite amenés dans une configuration 141 avec le même premier navire d'entraînement en tête et à l'intérieur, les flûtes étant étagées. Les navires d'entraînement passent successivement au point de croisement 142 pour arriver dans la configuration 143 en sortie de virage où le premier navire d'entraînement est en tête et à l'extérieur par rapport au prochain virage.

Les flûtes sont ramenées par exemple à la même profondeur et les navires d'entraînement au même niveau avant d'entamer une nouvelle phase d'analyse.

Il doit être évident pour l'homme du métier que la présente invention permet d'autres variantes de réalisation. Par conséquent, les présents modes de réalisation doivent être considérés comme illustrant l'invention.

## Revendications

1. Procédé d'analyse du sous-sol marin (1) dans lequel :
- au moins un navire source (2a) émet des impulsions sismiques réfléchies par le fond sous-marin et les couches du sous-sol,
- les impulsions sismiques réfléchies sont détectées, lors de phases d'analyse, par une pluralité de flûtes sismiques (31, 32, 33, 34) immergées et tractées les unes à côté des autres,
- les flûtes sismiques sont localisées géographiquement par un dispositif de localisation géographique (70a, 70b, 75, 76, 78),
- les flûtes sismiques sont localisées les unes par rapport aux autres par un dispositif de positionnement relatif comprenant des balises acoustiques (7 à 18) disposées le long de chaque flûte sismique,
- une pluralité de navires d'entraînement (5, 6), distincts dudit navire source (2a), tractent chacun au moins une desdites flûtes sismiques,
**caractérisé en ce que** les flûtes sismiques sont tractées, au moins lors de virages des navires d'entraînement, à au moins une profondeur déterminée (P19 à P22) distincte d'un navire d'entraînement à l'autre de façon à permettre un croisement d'au moins deux flûtes sismiques, tractées par des navires d'entraînement distincts, l'une au-dessus de l'autre.

2. Procédé d'analyse du sous-sol marin selon la revendication 1, **caractérisé en ce que** les phases d'analyse en ligne droite sont réalisées entre deux virages, les navires d'entraînement (65 à 68) étant décalés longitudinalement les uns devant les autres selon leur ordre de démarrage du virage, préalablement à chaque virage, les flûtes sismiques immergées et tractées les unes à côté des autres étant alors positionnées à des profondeurs étagées (P19, P20, P21, P22) d'un navire d'entraînement à l'autre et à des profondeurs décroissantes en allant du premier navire d'entraînement (68) démarrant le virage, au dernier navire d'entraînement (65) démarrant le virage.

3. Procédé d'analyse du sous-sol marin selon la revendication 2, **caractérisé en ce que** préalablement à chaque virage, les flûtes sismiques tractées par un même navire d'entraînement sont également positionnées à des profondeurs étagées (P23a, P23b, P24a, P24b, P25a, P25b, P26a, P2b) selon des profondeurs croissantes ou décroissantes en allant de la flûte la plus à l'extérieur du virage à la flûte la plus à l'intérieur du virage.

4. Procédé d'analyse du sous-sol marin selon la revendication 2 ou 3, **caractérisé en ce que** préalablement à chaque virage, les navires d'entraînement (65 à 68) sont décalés longitudinalement par un décalage successif en allant de la flûte extérieure au virage à la flûte intérieure au virage.

5. Procédé d'analyse du sous-sol marin selon l'une des revendications 2 à 4, **caractérisé en ce que** préalablement à chaque virage, au moins la flûte (41, 49) immergée à la profondeur la moins grande est attachée à une bouée (3a) de queue portant une première balise de localisation géographique (70) réalisant une localisation géographique de l'extrémité arrière (71) de ladite flûte.

6. Procédé d'analyse du sous-sol marin selon l'une des revendications 1 à 5, **caractérisé en ce que** les flûtes sismiques (31 à 36) sont localisées géographiquement au moins par la localisation d'une pluralité de deuxièmes balises (75, 76) de localisation géographique disposées chacune dans un des navires d'entraînement (5, 6).

7. Procédé d'analyse du sous-sol marin selon l'une des revendications 1 à 6, **caractérisé en ce que** les flûtes sismiques sont localisées géographiquement par :
- positionnement relatif de balises acoustiques (13a, 13b, 16a, 16b) disposées aux extrémités arrières des flûtes (33, 34, 35, 36) par rapport à au moins une balise acoustique (73) portée par au moins un navire de localisation (2b, 4), distinct des navires d'entraînement, tel que le navire source, et
- localisation géographique d'au moins une troisième balise de localisation géographique (74) disposée dans ledit navire de localisation (2b, 4).

8. Procédé d'analyse du sous-sol marin selon l'une des revendications 1 à 7, **caractérisé en ce qu'**au moins deux flûtes sismiques (31, 32 ou 33, 34) sont écartées l'une de l'autre par au moins une aile portante (101, 102 ou 103, 104) de façon à produire une faible trainée et à pouvoir être tractées par les navires d'entraînement (5 ou 6) ayant chacun une jauge brute inférieure à 500 UMS.

9. Système d'analyse du sous-sol marin (1) comprenant :
- au moins un navire source (2a) d'émission d'impulsions sismiques réfléchies par le fond sous-marin et les couches du sous-sol,
- une pluralité de flûtes sismiques (31, 32, 33, 34) immergées et tractées les unes à côté des autres pour recevoir les impulsions sismiques réfléchies,
- un dispositif de localisation géographique (70a, 70b, 75, 76, 78) des flûtes sismiques et
- un dispositif de positionnement relatif comprenant une pluralité de balises acoustiques (7 à 18) de localisation des flûtes sismiques les unes par rapport aux autres, les balises acoustiques étant disposées le long de chaque flûte sismique,
- une pluralité de navires d'entraînement (5, 6) distincts dudit navire source et tractant chacun au moins une desdites flûtes sismiques, **caractérisé en ce que** chaque navire d'entraînement comprend un organe de commande de la profondeur de ladite flûte tractée agencé de façon à régler au moins une profondeur déterminée (P19 à P22) distinctement d'un navire d'entraînement à l'autre au moins lors des virages des navires d'entraînement de façon à permettre un croisement d'au moins deux flûtes sismiques, tractées par des navires d'entraînement distincts, l'une au-dessus de l'autre.

10. Système d'analyse du sous-sol marin selon la revendication 9, **caractérisé en ce que** chaque navire d'entraînement tracte au moins deux flûtes sismiques (31, 32 ou 33, 34) écartées l'une de l'autre par au moins une aile portante (101, 102 ou 103, 104) de façon à produire une faible trainée et à pouvoir être tractées par les navires d'entraînement (5 ou 6) ayant chacun une jauge brute inférieure à 500 UMS.

11. Système d'analyse du sous-sol marin selon la revendication 10, **caractérisé en ce que** ledit organe de commande de la profondeur est agencé de façon à régler, à des profondeurs étagées, lesdites deux flûtes sismiques tractées par le même navire d'entraînement, au moins lors des virages des navires d'entraînement, les flûtes étant réglées à des profondeurs (P23a, P23b, P24a, P24b, P25a, P25b, P26a, P26b) croissantes ou décroissantes en allant de l'extérieur du virage vers l'intérieur du virage.

12. Système d'analyse du sous-sol marin selon l'une des revendications 9 à 11, **caractérisé en ce qu'**au moins une des flûtes (41, 49) est attachée à une bouée de queue portant une première balise de localisation géographique (70), la profondeur de cette flûte (41, 49) étant réglée au minimum au moins lors des virages.

13. Système d'analyse du sous-sol marin selon l'une des revendications 9 à 12, **caractérisé en ce que** le dispositif de localisation géographique comprend une pluralité de deuxièmes balises de localisation géographique (75, 76) disposées chacune dans un des navires d'entraînement (5, 6, 6a, 6b).

14. Système d'analyse du sous-sol marin selon l'une des revendications 9 à 13, **caractérisé en ce que** le dispositif de localisation géographique comprend une troisième balise de localisation géographique (74) d'au moins une extrémité arrière (13a, 13b, 16a, 16b) d'une des flûtes sismiques, cette troisième balise étant disposée dans un navire de localisation (2b, 4) distinct des navires d'entraînement, tel que le navire source, le navire de localisation comprenant une balise acoustique (73) de positionnement relatif des extrémités arrière des flûtes sismiques chacune équipée d'une des balises acoustiques à leur extrémité arrière.

## Patentansprüche

1. Verfahren zur Analyse des Meeresuntergrunds (1), bei welchem:
- mindestens ein Ursprungsschiff (2a) seismische Impulse abstrahlt, welche von dem Meeresboden und den Untergrundschichten reflektiert werden,
- die reflektierten seismischen Impulse während Analysephasen durch eine Vielzahl von seismischen Flöten (31, 32, 33, 34) erfasst werden, welche untergetaucht sind und nebeneinander geschleppt werden,
- die seismischen Flöten durch eine geographische Lokalisierungsvorrichtung (70a, 70b, 75, 76, 78) geographisch lokalisiert werden,
- die seismischen Flöten durch eine Vorrichtung zur relativen Positionierung zueinander lokalisiert werden, welche akustische Baken (7 bis 18) aufweist, die entlang jeder seismischen Flöte angeordnet sind,
eine Vielzahl von Schleppschiffen (5, 6), welche von dem genannten Ursprungsschiff (2a) verschieden sind, jeweils mindestens eine der genannten seismischen Flöten schleppen,
**dadurch gekennzeichnet, dass** die seismischen Flöten zumindest bei Kurvenfahrt der Schleppschiffe bei mindestens einer vorgegebenen Tiefe (P19 bis P22), welche von einem Schleppschiff zum anderen verschieden ist, geschleppt werden, um ein Kreuzen von mindestens zwei seismischen Flöten, welche von verschiedenen Schleppschiffen geschleppt werden, übereinander zu ermöglichen.

2. Verfahren zur Analyse des Meeresuntergrunds nach Anspruch 1, **dadurch gekennzeichnet, dass** die geradlinigen Analysephasen zwischen zwei Kurven durchgeführt werden, wobei die Schleppschiffe (65 bis 68) zuvor bei jeder Kurve longitudinal voreinander gemäß der Reihenfolge des Startens der Kurve versetzt sind, wobei die untergetauchten und nebeneinander geschleppten seismischen Flöten nun in abgestuften Tiefen (P19, P20, P21, P22) von einem Schleppschiff zu dem anderen und in abnehmenden Tiefen positioniert werden, wenn von dem ersten die Kurve startenden Schleppschiff (68) zu dem letzten, die Kurve startendem Schleppschiff (65) gegangen wird.

3. Verfahren zur Analyse des Meeresuntergrunds nach Anspruch 2, **dadurch gekennzeichnet, dass** zuvor bei jeder Kurve die von einem gleichen Schleppschiff geschleppten seismischen Flöten ebenfalls in abgestuften Tiefen (P23a, P23b, P24a, P24b, P25a, P25b, P26a, P26b) gemäß wachsenden oder abnehmenden Tiefen positioniert werden, wenn von der äußersten Flöte der Kurve zu der innersten Flöte der Kurve gegangen wird.

4. Verfahren zur Analyse des Meeresuntergrunds nach Anspruch 2 oder 3, **dadurch gekennzeichnet, dass** zuvor bei jeder Kurve die Schleppschiffe (65 bis 68) longitudinal um eine aufeinander folgende Verschiebung versetzt sind, wenn von der äußeren Flöte in der Kurve zu der inneren Flöte in der Kurve gegangen wird.

5. Verfahren zur Analyse des Meeresuntergrunds nach einem der Ansprüche 2 bis 4, **dadurch gekennzeichnet, dass** zuvor bei jeder Kurve mindestens die in der geringsten Tiefe untergetauchte Flöte (41, 49) an einer Endboje (3a) befestigt ist, welche eine erste Bake zur geographischen Lokalisierung (70) trägt, welche eine geographische Lokalisierung des hinteren Endes (71) der genannten Flöte durchführt.

6. Verfahren zur Analyse des Meeresuntergrunds nach einem der Ansprüche 1 bis 5, **dadurch gekennzeichnet, dass** die seismischen Flöten (31 bis 36) zumindest durch die Lokalisierung einer Vielzahl von zweiten Baken (75, 76) zur geographischen Lokalisierung, welche jeweils in einem der Schleppschiffe (5, 6) angeordnet sind, geographisch lokalisiert werden.

7. Verfahren zur Analyse des Meeresuntergrunds nach einem der Ansprüche 1 bis 6, **dadurch gekennzeichnet, dass** die seismischen Flöten geographisch lokalisiert werden durch:
- relative Positionierung von akustischen Baken (13a, 13b, 16a, 16b), welche an den hinteren Enden der Flöten (33, 34, 35, 36) in Bezug zu mindestens einer von mindestens einem Lokalisierungsschiff (2b, 4) getragenen akustischen Bake (73) angeordnet sind, welches von den Schleppschiffen verschieden ist, wie beispielsweise das Ursprungsschiff, und
- geographische Lokalisierung von mindestens einer dritten Bake zur geographischen Lokalisierung (74), welche in dem genannten Lokalisierungsschiff (2b, 4) angeordnet ist.

8. Verfahren zur Analyse des Meeresuntergrunds nach einem der Ansprüche 1 bis 7, **dadurch gekennzeichnet, dass** mindestens zwei seismische Flöten (31, 32 oder 33, 34) durch mindestens einen Tragflügel (101, 102 oder 103, 104) voneinander beabstandet sind, um einen geringen Widerstand zu erzeugen und um von den Schleppschiffen (5 oder 6) geschleppt werden zu können, welche jeweils eine Bruttotonnage von kleiner als 500 UMS aufweisen.

9. System zur Analyse des Meeresuntergrunds (1), aufweisend:
- mindestens ein Ursprungsschiff (2a) zur Ausstrahlung seismischer Impulse, welche von dem Meeresboden und den Untergrundschichten reflektiert werden,
- eine Vielzahl von seismischen Flöten (31, 32, 33, 34), welche untergetaucht sind und nebeneinander geschleppt werden, um die reflektierten seismischen Impulse zu empfangen,
- eine Vorrichtung zur geographischen Lokalisierung (70a, 70b, 75, 76, 78) der seismischen Flöten und
- eine Vorrichtung zur relativen Positionierung, welche akustische Baken (7 bis 18) zur Lokalisation der seismischen Flöten in Bezug zueinander aufweist, wobei die akustischen Baken entlang jeder seismischen Flöte angeordnet sind,
eine Vielzahl von Schleppschiffen (5, 6) aufweist, welche von dem genannten Ursprungsschiff verschieden sind und jeweils mindestens eine der genannten seismischen Flöten schleppen,
**dadurch gekennzeichnet, dass** jedes Schleppschiff ein Organ zur Steuerung der Tiefe der genannten geschleppten Flöte aufweist, welches derartig eingerichtet ist, um mindestens eine vorgegebene Tiefe (P19 bis P22) zumindest bei Kurven der Schleppschiffe einzustellen, welche von einem Schleppschiff zum anderen verschieden ist, um ein Kreuzen von mindestens zwei seismischen Flöten, welche von verschiedenen Schleppschiffen geschleppt werden, übereinander zu ermöglichen.

10. System zur Analyse des Meeresuntergrunds nach Anspruch 9, **dadurch gekennzeichnet, dass** jedes Schleppschiff mindestens zwei seismische Flöten (31, 32 oder 33, 34) schleppt, welche durch mindestens einen Tragflügel (101, 102 oder 103, 104) voneinander beabstandet sind, um einen geringen Widerstand zu erzeugen und um von den Schleppschiffen (5 oder 6) geschleppt werden zu können, welche jeweils eine Bruttotonnage von kleiner als 500 UMS aufweisen.

11. System zur Analyse des Meeresuntergrunds nach Anspruch 10, **dadurch gekennzeichnet, dass** das genannte Organ zur Steuerung der Tiefe dafür eingerichtet ist, um die zwei von dem gleichen Schleppschiff geschleppten genannten seismischen Flöten in abgestuften Tiefen einzustellen, wobei zumindest bei den Kurven der Schleppschiffe die Flöten in wachsenden oder abnehmenden Tiefen (P23a, P23b, P24a, P24b, P25a, P25b, P26a, P26b) eingestellt werden, wenn von der äußeren Flöte der Kurve zu der inneren Flöte der Kurve gegangen wird.

12. System zur Analyse des Meeresuntergrunds nach einem der Ansprüche 9 bis 11, **dadurch gekennzeichnet, dass** mindestens eine der Flöten (41, 49) an einer Endboje befestigt ist, welche eine erste Bake zur geographischen Lokalisierung (70) trägt, wobei die Tiefe dieser Flöte (41, 49) zumindest bei den Kurven auf ein Minimum eingestellt wird.

13. System zur Analyse des Meeresuntergrunds nach einem der Ansprüche 9 bis 12, **dadurch gekennzeichnet, dass** die Vorrichtung zur geographischen Lokalisierung eine Vielzahl von zweiten Baken zur geographischen Lokalisierung (75, 76) aufweist, welche jeweils in einem der Schleppschiffe (5, 6, 6a, 6b) angeordnet sind.

14. System zur Analyse des Meeresuntergrunds nach einem der Ansprüche 9 bis 13, **dadurch gekennzeichnet, dass** die Vorrichtung zur geographischen Lokalisierung eine dritte Bake zur geographischen Lokalisierung (74) von mindestens einem hinteren Ende (13a, 13b, 16a, 16b) einer der seismischen Flöten aufweist, wobei diese dritte Bake in einem Lokalisierungsschiff (2b, 4) angeordnet ist, welches von den Schleppschiffen verschieden ist, wie beispielsweise das Ursprungsschiff, wobei das Lokalisierungsschiff eine akustische Bake zur relativen Positionierung (73) der hinteren Enden der seismischen Flöten aufweist, welche jeweils an ihrem hinteren Ende mit einer der akustischen Baken ausgerüstet ist.

## Claims

1. A process to analyse the sub-seabed (1) in which:
- at least one source vessel (2a) emits seismic pulses that are reflected by the seabed and the lower layers of the sub-seabed,
- the reflected seismic pulses are detected, during the analysis phases by a plurality of underwater seismic streamers (31, 32, 33, 34) and towed beside one another,
- the seismic streamers are geographically located by a geographical location device (70a, 70b, 75, 76, 78),
- the seismic streamers are located with respect to one another by a relative positioning device comprising acoustic beacons (7 to 18) arranged along each seismic streamer,
- a plurality of towing vessels (5, 6) separate from said source vessel (2a), towing at least one of said seismic streamers,
**characterised in that** the seismic streamers are towed, at least during the turns of the towing vessels, at one predetermined depth (P19 to P22) at least, that is different from one towing vessel to the other so as to enable at least two seismic streamers, towed by separate towing vessels, to cross over one another.

2. Process to analyse the sub-seabed according to Claim 1, **characterised in that** the straight line analysis phases are made between two turns, the towing vessels (65 - 68) being longitudinally staggered one before another according to the order in which they begin to turn, prior to each turn, the underwater seismic streamers being towed beside one another then being positioned at depths (P19, P20, P21, P22) that are tiered from one towing vessel to another at decreasing depths from the first towing vessel (68) beginning to turn, to the last towing vessel (65) beginning to turn.

3. Process to analyse the sub-seabed according to Claim 2, **characterised in that** prior to each turn, the seismic streamers towed by one towing vessel are also positioned at tiered depths (P23a, P23b, P24a, P24b, P25a, P25b, P26a, P26b) at increasing or decreasing depths from the streamer to the outermost limit of the turn to the streamer to the innermost limit of the turn.

4. Process to analyse the sub-seabed according to Claims 2 or 3, **characterised in that** prior to each turn, the towing vessels (65 to 68) are staggered longitudinally in steps from the outermost streamer at the turn to the innermost streamer at the turn.

5. Process to analyse the sub-seabed according to one of Claims 2 to 4, **characterised in that** prior to each turn, at least the streamer (41, 49) immersed at the shallowest depth is attached to a tail buoy (3a) carrying a first geographical locator beacon (70) providing the geographical location of the tailing end (71) of said streamer.

6. Process to analyse the sub-seabed according to one of Claims 1 to 5, **characterised in that** the seismic streamers (31 to 36) are geographically located at least by the location of a plurality of second geographical locator beacons (75, 76) each arranged in one of the towing vessels (5, 6).

7. Process to analyse the sub-seabed according to one of Claims 1 to 6, **characterised in that** the seismic streamers are geographically located by:
- the relative positioning of the acoustic beacons (13a, 13b, 16a, 16b) arranged at the tailing ends of the streamers (33, 34, 35, 36) with respect to at least one acoustic beacon (73) carried by at least one locator vessel (2b, 4), separate from the towing vessels, such as the source vessel, and
- the geographical location of at least a third geographical locator beacon (7 4) arranged in said locator vessel (2b, 4).

8. Process to analyse the sub-seabed according to one of Claims 1 to 7, **characterised in that** at least two seismic streamers (31, 32 or 33, 34) are spaced from one another by at least one hydrofoil (101, 102 or 103, 104) intended to cause slight drag and able to be towed by towing vessels (5 or 6) each having a gross tonnage of less than 500 UMS.

9. A system to analyse the sub-seabed (1) comprising:
- at least one source vessel (2a) for the emission of seismic pulses reflected by the seabed and the lower layers of the sub-seabed,
- a plurality of underwater seismic streamers (31, 32, 33, 34) towed beside one another to receive the reflected seismic pulses,
- a geographical device (70a, 70b, 75, 76, 78) to locate the seismic streamers and
- a relative positioning device comprising a plurality of acoustic beacons (7 to 18) to locate the seismic streamers with respect to one another, the acoustic beacons being arranged along each seismic streamer,
- a plurality of towing vessels (5, 6), separate from said source vessel, each towing at least one of said seismic streamers,
**characterised in that** each towing vessel comprises a control element for the depth of said towed streamer arranged so as to set at least one predetermined depth (P19 to P22) that is different from one towing vessel to another at least during the turning operations of the towing vessels so as to enable at least two seismic streamers towed by separate towing vessels to cross over one another.

10. A system to analyse the sub-seabed according to Claim 9, **characterised in that** each towing vessel tows at least two seismic streamers (31, 32 or 33, 34) spaced from one another by at least one hydrofoil intended (101, 102 or 103, 104) to cause slight drag and be able to be towed by towing vessels (5 or 6) each having gross tonnage of less than 500 UMS.

11. A system to analyse the sub-seabed according to Claim 10, **characterised in that** said depth control element is arranged so as to set at tiered depths said two seismic streamers towed by the same towing vessel, at least during the turning operations of the towing vessels, the streamers being set at tiered increasing or decreasing depths (P23a, P23b, P24a, P24b, P25a, P25b, P26a, P26b) from the outermost limit of the turn to the streamer to the innermost limit of the turn.

12. A system to analyse the sub-seabed according to one of Claims 9 to 11, **characterised in that** at least one of the streamers (41, 49) is attached to a tail buoy carrying a first geographical locator beacon (70), the depth of this streamer (41, 49) being set at its shallowest during the turns.

13. A system to analyse the sub-seabed according to one of Claims 9 to 12, **characterised in that** the geographical location device comprises a plurality of second geographical locator beacons (75, 76) each arranged in one of the towing vessels (5, 6, 6a, 6b).

14. A system to analyse the sub-seabed according to one of Claims 9 to 13, **characterised in that** the geographical location device comprises a third beacon (74) to geographically locate at least one tailing end (13a, 13b, 16a, 16b) of one of the seismic streamers, this third beacon being arranged in a locator vessel (2b, 4) separate from the towing vessels, such as the source vessel, the locator vessel comprising an acoustic beacon (73) for the relative positioning of the tailing ends of the seismic streamers each equipped at its tailing end with one of the acoustic beacons.
